# EUROPEAN PATENT APPLICATION

(11) **EP 4 801 076 A1**
(43) Date of publication of application: **02.09.2026**
(21) Application number: 23956521.1
(22) Date of filing: 27.10.2023
(51) Int. Cl.: H04W 4/38, H04W 24/10

(54) **WIRELESS SENSING METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: TANG, Hai, Dongguan, Guangdong 523860 (CN)
(74) Representative: Novagraaf Technologies
(86) International application number: PCT/CN2023/127297
(87) International publication number: WO 2025/086280

(57) **Abstract**

A wireless sensing method and apparatus, a device, and a storage medium, relating to the technical field of communications. The method comprises: respectively sending first information to at least one second device among a plurality of second devices, wherein the first information sent to a target second device among the at least one second device is used for indicating a time-frequency resource allocated to the target second device, and the time-frequency resource is used for the target second device to send a sensing signal and/or receive a sensing signal (510). A first device sends first information to a target second device to indicate a time-frequency resource allocated to the target second device, so that the target second device can send and/or receive a sensing signal on the corresponding time-frequency resource. The first device can collaboratively manage a plurality of second devices, and corresponding time-frequency resources are respectively allocated to the plurality of second devices, so that the plurality of second devices can perform collaborative sensing, so as to improve the accuracy of a sensing result.

## Description

### TECHNICAL FIELD

Embodiments of the present disclosure relate to the technical field of communications, and in particular, relate to a wireless sensing method and apparatus, and a device and a storage medium thereof.

### RELATED ART

Using wireless signals for sensing can effectively reduce security and privacy risks (e.g., compared to visual sensors) and effectively acquire information in environments unsuitable for other sensors. With widely deployed and continuously covered wireless communication systems, such as 5^{th} generation (5G) mobile communication technology, monitoring can be conducted over extremely large areas. However, how to achieve coordinated operation among a plurality of devices for sensing requires further discussion and research.

### SUMMARY

Embodiments of the present disclosure provide a wireless sensing method and apparatus, and a device and storage medium thereof. The technical solutions are as follows:

According to an aspect of the embodiments of the present disclosure, a wireless sensing method is provided. The method is performed by a first device. The method includes:
respectively transmitting first information to at least one of a plurality of second devices, wherein the first information transmitted to a target second device of the at least one of the plurality of second devices is used to indicate a time-frequency resource allocated to the target second device, wherein the time-frequency resource is used for the target second device to transmit a sensing signal and/or receive a sensing signal.

According to an aspect of the embodiments of the present disclosure, a wireless sensing method is provided. The method is performed by a second device. The method includes:
receiving first information from a first device, wherein the first information is used to indicate a time-frequency resource allocated to the second device, wherein the time-frequency resource is used to transmit a sensing signal and/or receive a sensing signal.

According to an aspect of the embodiments of the present disclosure, a wireless sensing apparatus is provided. The apparatus includes:
a transmitting module, configured to respectively transmit first information to at least one of a plurality of second devices, wherein the first information transmitted to a target second device of the at least one of the plurality of second devices is used to indicate a time-frequency resource allocated to the target second device, wherein the time-frequency resource is used for the target second device to transmit a sensing signal and/or receive a sensing signal.

According to an aspect of the embodiments of the present disclosure, a wireless sensing apparatus is provided. The apparatus includes:
a receiving module, configured to receive first information from a first device, wherein the first information is used to indicate a time-frequency resource allocated to the second device, wherein the time-frequency resource is used to transmit a sensing signal and/or receive a sensing signal.

According to an aspect of the embodiments of the present disclosure, a communication device is provided. The communication device includes a processor and a memory. The memory is configured to store one or more computer programs, which when executed by the processor, cause the communication device to perform the wireless sensing method as described above. The communication device may be a first device or a second device.

According to an aspect of the embodiments of the present disclosure, a computer-readable storage medium is provided. The computer-readable storage medium stores one or more computer programs, which when executed by a processor, cause the processor to perform the wireless sensing method as described above.

According to an aspect of the embodiments of the present disclosure, a chip is provided. The chip includes programmable logic circuitry and/or one or more program instructions. The chip, when running, is caused to perform the wireless sensing method as described above.

According to an aspect of the embodiments of the present disclosure, a computer program product is provided. The computer program product includes one or more computer instructions stored in a computer-readable storage medium. The one or more computer instructions, when read from the computer-readable storage medium and executed by a processor, cause the processor to perform the wireless sensing method as described above.

The technical solutions according to the embodiments of the present disclosure achieve the following beneficial effects:

The first device transmits first information to the target second device to indicate the time-frequency resource allocated to the target second device, enabling the target second device to transmit and/or receive a sensing signal on the corresponding time-frequency resource. The first device is capable of coordinating the management of a plurality of second devices, and by respectively allocating time-frequency resources to the plurality of second devices, enables the plurality of second devices to perform coordinated sensing, thereby improving the accuracy of sensing results.

### BRIEF DESCRIPTION OF DRAWINGS

FIG. 1 is a schematic diagram of a network architecture according to some embodiments of the present disclosure;
FIG. 2 is a schematic diagram of eight sensing modes according to some embodiments of the present disclosure;
FIG. 3 is a schematic diagram of a sensing system including a plurality of sensing nodes according to some embodiments of the present disclosure;
FIG. 4 is a schematic diagram of a wireless sensing scenario according to some embodiments of the present disclosure;
FIG. 5 is a flowchart of a wireless sensing method according to some embodiments of the present disclosure;
FIG. 6 is a schematic diagram of a coordinated wireless sensing scenario according to some embodiments of the present disclosure;
FIG. 7 is a schematic diagram of a coordinated wireless sensing scenario according to some embodiments of the present disclosure;
FIG. 8 is a schematic diagram of time-frequency resource allocation according to some embodiments of the present disclosure;
FIG. 9 is a block diagram of a wireless sensing apparatus according to some embodiments of the present disclosure;
FIG. 10 is a block diagram of a wireless sensing apparatus according to some embodiments of the present disclosure;
FIG. 11 is a schematic structural diagram of a first device according to some embodiments of the present disclosure; and
FIG. 12 is a schematic structural diagram of a second device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenarios described in the embodiments of the present disclosure are provided to more clearly illustrate the technical solutions of the embodiments, and do not constitute limitations on the technical solutions according to these embodiments. As recognized by those skilled in the art, with the evolution of network architectures and emergence of new service scenarios, the technical solutions according to the embodiments of the present disclosure are also applicable to addressing similar technical problems.

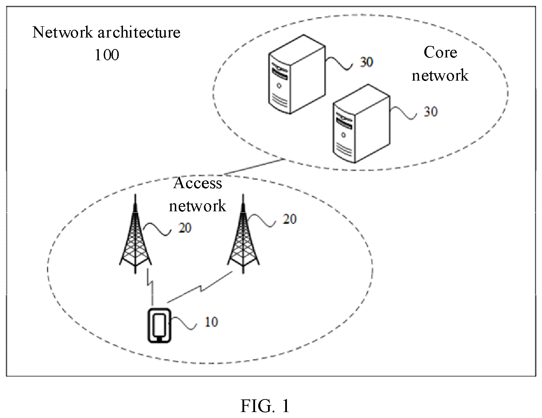

FIG. 1 is a schematic diagram of a network architecture 100 according to some embodiments of the present disclosure. The network architecture 100 may involve a terminal device 10, an access network device 20, and a core network element 30.

The terminal device 10 may be a user equipment (UE), an access terminal, a subscriber unit, a subscriber station, a mobile station, a mobile platform, a remote station, a remote terminal, a mobile device, a wireless communication device, a user agent, or a user apparatus. In some embodiments, the terminal device 10 may also be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5G system, a terminal device in an evolved public land mobile network (PLMN), or the like, which is not limited in the embodiments of the present disclosure. For the convenience of description, the devices mentioned above are collectively referred to as the terminal device. A plurality of terminal devices 10 are usually deployed. At least one terminal device 10 may be distributed in a cell managed by each access network device 20. A terminal device may also be referred to simply as a terminal or UE, and those skilled in the art shall understand its meaning.

The access network device 20 is a device deployed in an access network to provide a wireless communication function for the terminal device 10. The access network device 20 may include various forms of macro base stations, micro base stations, relay stations, access points, and the like. In systems employing different radio access technologies, devices with the function of the access network device may have different names, for example, gNodeB or gNB in a 5G NR system. As the communication technologies evolve, the name "access network device" may change. For the convenience of description, in the embodiments of the present disclosure, the above apparatuses providing the wireless communication function for the terminal device 10 are collectively referred to as the access network device. In some embodiments, a communication relationship may be established between the terminal device 10 and the core network element 30 using the access network device 20. For example, in an LTE system, the access network device 20 may be an evolved universal terrestrial radio access network (EUTRAN) or at least one eNodeB in the EUTRAN. In a 5G NR system, the access network device 20 may be a radio access network (RAN) or at least one gNB in the RAN. In the embodiments of the present disclosure, unless otherwise specified, the term "network device" is the access network device 20, e.g., a base station.

The core network element 30 is an element deployed in a core network. The core network element 30 mainly functions to provide a user connection, user management and service bearing, and to provide an interface to an external network as a bearer network. For example, core network elements in the 5G NR system may include elements such as an access and mobility management function (AMF) entity, a user plane function (UPF) entity, and a session management function (SMF) entity.

In some embodiments, the access network device 20 communicates with the core network element 30 using a specific air interface technology, e.g., an NG interface in the 5G NR system. The access network device 20 communicates with the terminal device 10 using a specific air interface technology, e.g., over a Uu interface.

The "5G NR system" in the embodiments of the present disclosure may also be referred to as a 5G system or an NR system, but those skilled in the art may understand its meaning. The technical solutions according to the embodiments of the present disclosure may be applicable to the LTE system, the 5G NR system, an evolved system subsequent to the 5G NR system (e.g., beyond 5G (B5G) system, 6^{th} generation (6G) system), a narrowband Internet of Things (NB-IoT) system, and other communication systems. This is not limited in the present disclosure.

In the embodiments of the present disclosure, the network device provides services for a cell. The terminal device communicates with the network device over a transmission resource (for example, a frequency-domain resource or a spectrum resource) on a carrier used by the cell. The cell may be a cell corresponding to the network device (for example, the base station). The cell may belong to a macro base station or a base station corresponding to a small cell. The small cell herein may include a metro cell, a micro cell, a pico cell, a femto cell, and the like. These small cells have the characteristics of small coverage and low transmit power, and are applicable to providing high-rate data transmission services.

Integrated sensing and communication refers to the integration of communication and sensing functions, enabling future communication systems to simultaneously possess the communication and sensing functions. While transmitting information over wireless channels, these systems actively recognize and analyze channel characteristics to sense the physical features of the surrounding environment, thereby achieving mutual enhancement between the communication and sensing functions. For example, by using base station signals to sense environmental information, communication links may be designed to avoid obstacles, thereby improving communication performance.

The next-generation networks (e.g., B5G and 6G networks) are expected to be an integrated fusion of mobile communication networks, sensing networks, and computing power networks. In a narrow sense, a sensing network refers to a system equipped with capabilities including target localization (range measurement, velocity measurement, angle measurement), target imaging, target detection, target tracking, and target recognition. In a broader sense, a sensing network encompasses all services, networks, users and terminals, as well as attributes and states of environmental objects. From the perspective of sensing applications, sensing may be categorized as follows:

Outdoor, wide-area, or local-area applications: including smart cities (e.g., weather monitoring), smart transportation/high-speed rail (e.g., high-precision map construction, road surveillance, intrusion detection), and low-altitude applications (e.g., drone monitoring and obstacle avoidance, flight intrusion detection, flight path management), or the like.

Indoor or local-area applications: including smart home and health management (e.g., respiratory monitoring, intrusion detection, gesture/posture recognition, motion monitoring, movement trajectory tracking), smart factories (e.g., intrusion detection, material detection, defect inspection of objects), or the like.

The above are merely illustrative, providing some categories of sensing applications. The application areas of sensing are not limited to the examples described above.

Wireless communication and sensing are two major key applications of modern radio frequency technology. Sensing leverages radio waves to detect parameters of the physical environment, achieving environmental awareness such as target localization, motion recognition, and imaging. Traditionally, sensing and wireless communication have been separate and independently developed, leading to wastage of wireless spectrum and hardware resources. Entering the B5G and 6G eras, the communication spectrum is expanding toward millimeter-wave, terahertz, and visible-light communications; in the future, the spectrum used for wireless communication will increasingly overlap with that traditionally reserved for sensing. Integrated sensing and communication technology combines the two functions of wireless communication and sensing. It may harness the wireless communication resources to implement sensing functions; it may leverage widely deployed cellular networks to enable sensing services over larger geographic areas; it may employ base stations and a plurality of terminals for joint sensing, achieving higher sensing accuracy; and it may repurpose existing wireless communication hardware modules to implement sensing functions, thereby reducing costs. In short, integrated sensing and communication technology endows future wireless communication systems with sensing capabilities, providing a foundation for the development of future services such as smart transportation, smart cities, smart factories, and unmanned aerial vehicles.

In the embodiments of the present disclosure, "sensing" refers to a process of directly or indirectly obtaining sensing information about a target or an environment based on at least one type of sensing signal, such as acoustic waves, electromagnetic waves, or light waves (including but not limited to lasers). For example, by transmitting and receiving sensing signals and performing measurement or other processing on the sensing signals, sensing information about the target or the environment is acquired, enabling services such as localization, range measurement, velocity measurement, angle measurement, target imaging, target detection, target tracking, and target recognition.

In addition, the term "sensing" mentioned in the embodiments of the present disclosure may also be replaced by any other term that conveys a meaning related to sensing, such as localization, range measurement, velocity measurement, angle measurement, target imaging, target detection, target tracking, and target recognition.

The nodes involved in sensing are as follows:

Sensing transmitter node: a node that transmits sensing signals.

Sensing receiver node: a node that receives sensing signals.

Sensing node: The sensing transmitter node and the sensing receiver node are collectively referred to as sensing nodes, which are nodes responsible for performing sensing operations.

Sensing Management Node: a node that manages and controls sensing tasks. The sensing management node configures sensing tasks for the sensing nodes, and after performing sensing, the sensing nodes feed back the sensing results to the sensing management node.

Sensing trigger node: a node that initiates sensing, configures sensing scenarios, and parses sensing feedback from sensing nodes.

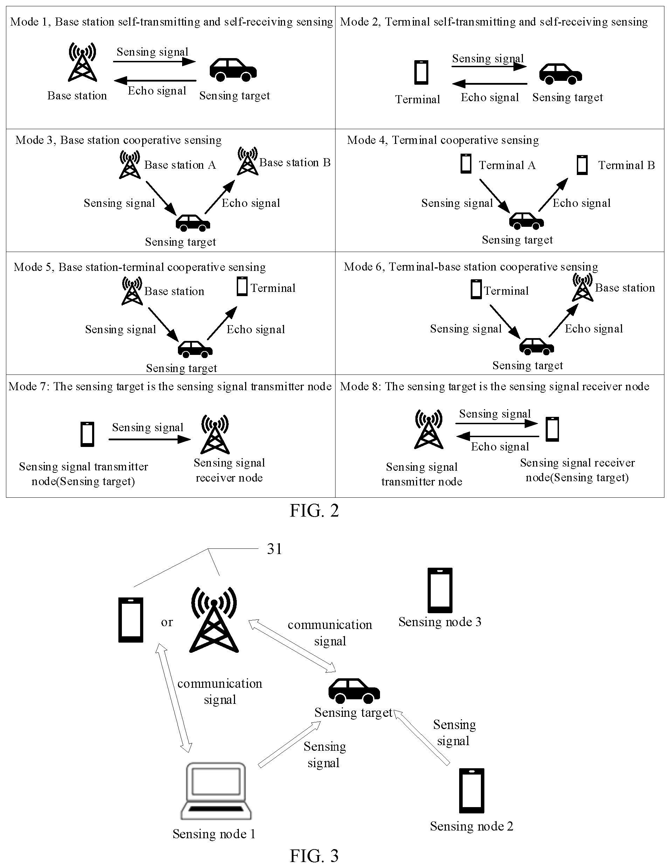

Regarding sensing, it can be categorized into eight modes illustrated in FIG. 2.

Mode 1, Base station self-transmitting and self-receiving sensing: A base station transmits a sensing signal and receives the echo signal. In Mode 1, the sensing transmitter node and the sensing receiver node are the same base station. That is, the base station transmits a sensing signal toward a sensing target, and after the sensing signal is reflected by the sensing target, the same base station receives the echo signal (i.e., the sensing signal after being reflected by the sensing target).

Mode 2, Terminal self-transmitting and self-receiving sensing: A terminal transmits a sensing signal and receives the echo signal. In Mode 2, the sensing transmitter node and the sensing receiver node are the same terminal. That is, the terminal transmits a sensing signal toward a sensing target, and after the sensing signal is reflected by the sensing target, the same terminal receives the echo signal.

Mode 3, Base station cooperative sensing: One base station (e.g., base station A in the figure) transmits a sensing signal, while another base station (e.g., base station B in the figure) receives the echo signal. In Mode 3, the sensing transmitter node and the sensing receiver node are different base stations. That is, one base station transmits a sensing signal toward a sensing target, and after the sensing signal is reflected by the sensing target, the other base station receives the echo signal.

Mode 4, Terminal cooperative sensing: One terminal (e.g., terminal A in the figure) transmits a sensing signal, while another terminal (e.g., terminal B in the figure) receives the echo signal. In Mode 4, the sensing transmitter node and the sensing receiver node are distinct terminals. That is, one terminal transmits a sensing signal toward a sensing target, and after the sensing signal is reflected by the sensing target, the other terminal receives the echo signal.

Mode 5, Base station-terminal cooperative sensing: A base station transmits a sensing signal, and a terminal receives the echo signal. In Mode 5, the sensing transmitter node is the base station, and the sensing receiver node is the terminal. That is, the base station transmits a sensing signal toward the sensing target; after the sensing signal is reflected by the sensing target, the terminal receives the echo signal.

Mode 6, Terminal-base station cooperative sensing: A terminal transmits a sensing signal, and a base station receives the echo signal. In Mode 6, the sensing transmitter node is the terminal, and the sensing receiver node is the base station. That is, the terminal transmits a sensing signal toward the sensing target; after the sensing signal is reflected by the sensing target, the base station receives the echo signal.

Mode 7: The sensing target is the sensing signal transmitter node. In Mode 7, the sensing transmitter node is a terminal, and the sensing receiver node is a base station. Since the sensing target (the terminal) is the sensing transmitter node, after the sensing signal is transmitted from the sensing transmitter node (the terminal) to the sensing receiver node (the base station), no reflection is required; the base station may directly receive and decode sensing results.

Mode 8: The sensing target is the sensing signal receiver node. In Mode 8, the sensing transmitter node is a base station, and the sensing receiver node is a terminal. Since the sensing target (the terminal) is the sensing receiver node, after receiving the sensing signal, the terminal needs to feed back the sensing result to the base station, enabling the base station to obtain the sensing result.

It should be noted that, for ease of reference, in the embodiments of the present disclosure, the echo signal illustrated in FIG. 2 is also referred to as a sensing signal.

The nodes that transmit sensing signals and the nodes that receive sensing signals can be collectively referred to as sensing nodes. Among the eight sensing modes mentioned above, there is typically only one or a pair of sensing nodes. However, in wireless communication systems, where the number of terminal devices (e.g., mobile phones and IoT devices) is large, when a plurality of sensing nodes (i.e., base stations, mobile phones, IoT devices, etc., which are capable of transmitting and/or receiving sensing signals) are present around a single sensed object, the collaborative participation of the plurality of sensing nodes in sensing can enhance the accuracy of sensing and meet more complex sensing service requirements, thereby providing richer sensing services. As illustrated in FIG. 3, when a plurality of sensing nodes (e.g., Sensing node 1, Sensing node 2, and Sensing node 3 in FIG. 3) are present within the system, there may be a sensing control node 31 that controls and manages the entire sensing service to improve efficiency. This sensing control node 31 may be a base station, a terminal device, or a core network element.

Prior to description of the technical solution of the present disclosure, some related technical knowledge involved in the present disclosure is described. The following related arts, as optional solutions, may be combined arbitrarily with the technical solution according to the embodiments of the present disclosure; all such combinations fall within the protection scope according to the embodiments of the present disclosure. The embodiments of the present disclosure include at least some of the following contents.

Wireless sensing refers to the use of wireless signals such as those from 5G and wireless fidelity (Wi-Fi) to sense environmental information, including the distribution, size, shape, movement speed, movement direction, and trajectory of objects in the environment. Currently, there are no large-scale application cases for this technology. Utilizing wireless signals for sensing can effectively reduce security and privacy risks (compared, for example, to visual sensors) and effectively acquire information in environments unsuitable for other sensors, such as lightless dark environments or scenarios where contact-based measurements are impractical. Leveraging widely deployed, continuously covered wireless communication systems (such as 5G), monitoring may be conducted over extremely large areas. Potential application scenarios include drone management, traffic monitoring, gait and fall detection, offering services that are difficult to achieve with existing technologies.

Due to the characteristics of electromagnetic wave transmission, wireless sensing technology has the following limitations that need to be addressed in practical applications:

1. When electromagnetic waves pass through obstacles or media, signal degradation occurs due to propagation loss, making them difficult to penetrate the obstacle with sufficiently large physical dimensions (e.g., a thick reinforced concrete wall).

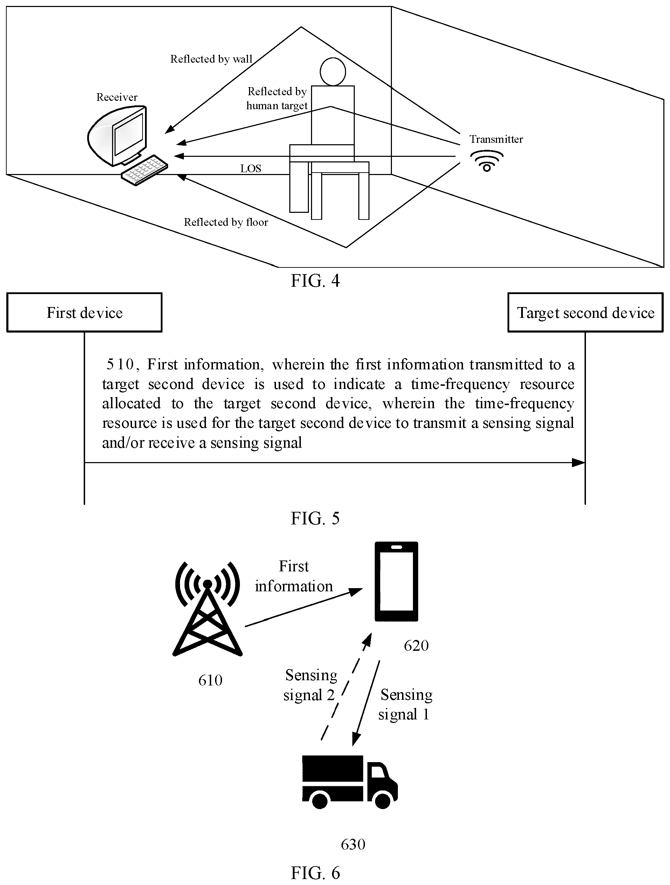

2. As electromagnetic waves propagate through the environment, they generate multipath due to characteristics such as reflection, refraction, and scattering, which result in temporal spreading. The presence or absence of a line of sight (LOS) path, as well as the distribution of multipath components, significantly affects the accuracy of measurements of key parameters such as distance. As illustrated in FIG. 4, the multipath generated by reflection consists of components reflected by wall, reflected by floor, and reflected by human target.

3. During the sensing measurement of a moving target, a single sensing device that does not move together with the target cannot guarantee LOS or effective multipath propagation conditions throughout the entire sensing process due to the influence of obstacles in the surrounding environment, leading to significant fluctuations in the validity of the sensing measurement results. Therefore, employing a plurality of sensing devices located at different positions to collaborate is an important approach to effectively overcome the impact of obstacles and improve validity of sensing measurement results.

FIG. 5 illustrates a flowchart of a wireless sensing method according to some embodiments of the present disclosure. The method is performed by a first device. The first device is used for collaboratively managing a plurality of second devices. The method includes the following step 510.

In step 510, the first device respectively transmits first information to at least one of a plurality of second devices, wherein the first information transmitted to a target second device of the at least one of the plurality of second devices is used to indicate a time-frequency resource allocated to the target second device, wherein the time-frequency resource is used for the target second device to transmit a sensing signal and/or receive a sensing signal.

Accordingly, the target second device receives the first information from the first device.

In some embodiments, the first device has a communication connection with the plurality of second devices mentioned above.

In some embodiments, the second device is used to transmit a sensing signal to the sensing target and/or to receive a sensing signal from the sensing target.

In some embodiments, as illustrated in FIG. 6, the first device 610 transmits first information to the second device, where the first information is used to indicate the time-frequency resource allocated to the second device 620. After receiving the first information from the first device 610, the second device 620 transmits sensing signal 1 to the sensing target 630 on the time-frequency resource indicated by the first information. Alternatively, after receiving the first information from the first device 610, the second device 620 receives sensing signal 2 from the sensing target 630 on the time-frequency resource indicated by the first information.

In some embodiments, the first device may be a network device or a terminal device; the second device may also be a network device or a terminal device, the present disclosure does not impose any limitations in this regard.

In some embodiments, the first device is a device capable of transmitting and receiving wireless signals. By way of example, the first device may be a terminal device or a network device; the network device may include access network devices and core network devices. For example, the first device may be a UE, a wireless base station, or a core network element, which is not limited in the present disclosure.

In some embodiments, the second device is a device capable of transmitting and receiving wireless signals. For example, the second device may be a UE, a customer premises equipment (CPE), a wireless relay station, or the like, which is not limited in the present disclosure.

In some embodiments, the method provided by the present disclosure may be applicable to any one of the eight modes illustrated in FIG. 2. Since the second device may be either a terminal device or a network device, for the second device, the eight modes illustrated in FIG. 2 can be summarized as self-transmitting and self-receiving sensing scenarios and A-transmitting and B-receiving sensing scenarios.

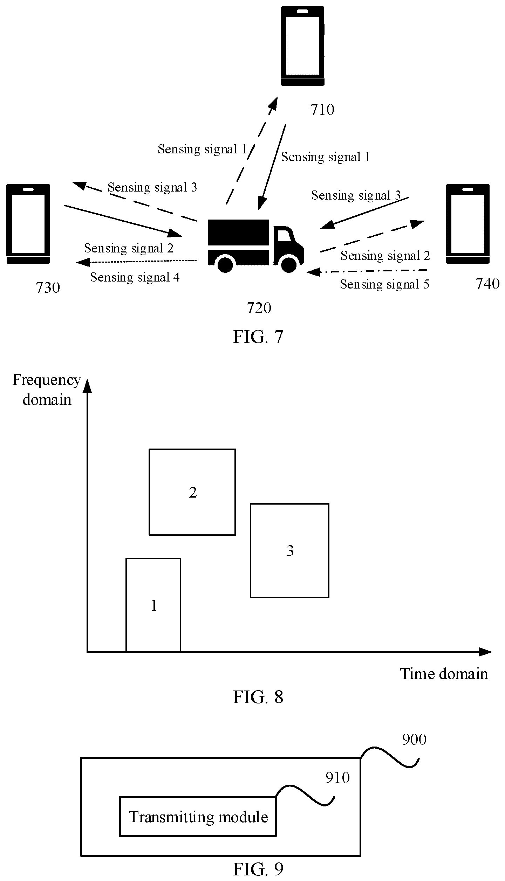

The self-transmitting and self-receiving sensing scenario refers to a situation where the second device that transmits the sensing signal and the second device that receives the sensing signal are the same second device. As an example, as illustrated in FIG. 7, the second device 710 is configured to transmit a sensing signal 1 to the sensing target 720 and also to receive the sensing signal 1 reflected by the sensing target 720.

The A-transmitting and B-receiving sensing scenario refers to a situation in which the device that transmits the sensing signal and the device that receives the sensing signal are not the same device. As an example, as illustrated in FIG. 7, device 730 is used to transmit sensing signal 2 to sensing target 720, while device 740 is used to receive sensing signal 2 reflected by sensing target 720.

In some embodiments, in the A-transmitting and B-receiving sensing scenario, the device that transmits the sensing signal may also serve as the sensing target. For example, as illustrated in FIG. 7, the sensing target 720 transmits a sensing signal 4, and the second device 730 is used to receive the sensing signal 4 transmitted by the sensing target.

In some embodiments, in a case where the sensing target transmits a sensing signal, the first device may also transmit first information to the sensing target. In this case, the first information is used to indicate the time-frequency resources allocated to the sensing target. The time-frequency resources are used for the sensing target to transmit a sensing signal.

In some embodiments, in the A-transmitting and B-receiving sensing scenario, the device receiving the sensing signal may also serve as the sensing target. For example, as illustrated in FIG. 7, the sensing target 720 receives the sensing signal 5, while the second device 740 is used to transmit the sensing signal 5 to the sensing target.

In some embodiments, in a case where the sensing target receives a sensing signal, the first device may also transmit first information to the sensing target. In this case, the first information is used to indicate the time-frequency resources allocated to the sensing target. The time-frequency resources are used for the reception of the sensing signal by the sensing target.

It should be noted that, in the embodiments of the present disclosure, the self-transmitting and self-receiving sensing scenario and the A-transmitting and B-receiving sensing scenario are merely used to refer to the two types of scenarios. These scenarios may also go by other names, such as scenario A and scenario B, which is not limited in the present disclosure.

In some embodiments, in the A-transmitting and B-receiving sensing scenario, the second device may also be used both for transmitting sensing signals and for receiving sensing signals. For example, as illustrated in FIG. 7, the second device 730 is used to transmit sensing signal 2 to the sensing target 720 and also to receive sensing signal 3 reflected by the sensing target 720; the second device 740 is used to transmit sensing signal 3 to the sensing target 720 and also to receive sensing signal 2 reflected by the sensing target 720.

In some embodiments, in a case where the second device is configured solely for transmitting sensing signals to the sensing target, the first information may indicate only the time-frequency resources allocated for transmitting sensing signals. In a case where the second device is configured solely for receiving sensing signals from the sensing target, the first information may indicate only the time-frequency resources allocated for receiving sensing signals. In a case where the second device is configured both for transmitting sensing signals to the sensing target and for receiving sensing signals from the sensing target, the first information may indicate both the time-frequency resources for transmitting sensing signals and the time-frequency resources for receiving sensing signals.

In some embodiments, the first device is further configured to: transmit a sensing signal to the sensing target and/or receive a sensing signal from the sensing target. In other words, there may be a single device that serves as both the first device and the second device, simultaneously possessing the functionalities of the first device and the second device.

In some embodiments, in a case where the first device may be configured to transmit a sensing signal to a sensing target and/or receive a sensing signal from the sensing target, then the first device may also participate in the self-transmitting and self-receiving sensing scenario and the A-transmitting and B-receiving sensing scenario described above. In the self-transmitting and self-receiving sensing scenario, the first device transmits sensing signal 1 to the sensing target and receives sensing signal 1 back from the sensing target. In the A-transmitting and B-receiving sensing scenario, the first device transmits sensing signal 2 to the sensing target, while another device (which may be a first device different from the first device that transmits sensing signal 2, or may be a second device) receives the sensing signal 2 reflected by the sensing target. Alternatively, another device (which may be a first device different from the first device that received sensing signal 3, or may be a second device) transmits sensing signal 3 to the sensing target, and the first device receives the sensing signal 3 reflected by the sensing target. Alternatively, the sensing target transmits sensing signal 4, and the first device receives the sensing signal 4 transmitted by the sensing target. Alternatively, the first device transmits sensing signal 5 to the sensing target, and the sensing target receives sensing signal 5.

In some embodiments, for any two second devices configured to transmit a sensing signal, the time-frequency resources allocated to the two second devices are not completely identical.

In some embodiments, for any two second devices configured to transmit a sensing signal, the two second devices are allocated different time-domain resources and/or different frequency-domain resources.

In some embodiments, for any two second devices configured to transmit a sensing signal, the time-frequency resources allocated to the two second devices may be one of the following scenarios:

The two second devices are allocated identical time-domain resources but different frequency-domain resources.

The two second devices are allocated different time-domain resources but identical frequency-domain resources.

The two second devices are allocated different time-domain resources and different frequency-domain resources.

In some embodiments, for any two second devices configured to receive a sensing signal, the time-frequency resources allocated to the two second devices are not completely identical.

In some embodiments, for any two second devices configured to receive a sensing signal, the two second devices are allocated different time-domain resources and/or different frequency-domain resources.

In some embodiments, for any two second devices configured to receive a sensing signal, the time-frequency resources allocated to the two second devices may be one of the following scenarios:

The two second devices are allocated identical time-domain resources but different frequency-domain resources.

The two second devices are allocated different time-domain resources but identical frequency-domain resources.

The two second devices are allocated different time-domain resources and different frequency-domain resources.

In some embodiments, the time-domain resources allocated to two second devices being different means that the time-domain resources allocated to the two second devices do not completely overlap. For example, as illustrated in FIG. 8, resource 1 and resource 2 partially overlap in the time domain, while resource 1 and resource 3 do not overlap at all in the time domain, then it can be stated that the time-domain resources occupied by resource 1 and resource 2 are different, and the time-domain resources occupied by resource 1 and resource 3 are also different.

In some embodiments, the frequency-domain resources allocated to two second devices being different means that the frequency-domain resources allocated to these two second devices do not completely overlap. For example, as illustrated in FIG. 8, resource 1 and resource 2 do not overlap at all in the frequency domain, while resource 1 and resource 3 partially overlap in the frequency domain. Therefore, it can be stated that the frequency-domain resources occupied by resource 1 and resource 2 are different, and the frequency-domain resources occupied by resource 1 and resource 3 are also different.

In some embodiments, for the A-transmitting and B-receiving sensing scenario, the time-frequency resources allocated to the second device used for transmitting the sensing signal may be identical to the time-frequency resources allocated to the second device used for receiving the sensing signal. For example, as illustrated in FIG. 7, second device 730 is used to transmit sensing signal 2 to sensing target 720, while second device 740 is used to receive the sensing signal 2 reflected by sensing target 720. The time-frequency resources allocated to second device 730 and second device 740 may be identical.

In the technical solution according to the present disclosure, the first device transmits first information to the target second device to indicate the time-frequency resource allocated to the target second device, enabling the target second device to transmit and/or receive a sensing signal on the corresponding time-frequency resource. The first device is capable of coordinating the management of a plurality of second devices, and by respectively allocating time-frequency resources to the plurality of second devices, thereby enabling the plurality of second devices to perform coordinated sensing, thereby improving the accuracy of sensing results.

In some embodiments, in addition to the first information, the first device may also transmit other information to the second device to better enable coordinated management of a plurality of second devices.

In some embodiments, the first device may also transmit location information and/or timing information of the first device to at least one second device.

Correspondingly, the second device receives location information and/or timing information of the first device from the first device.

In some embodiments, the location information of the first device refers to the precise location information of the first device. In some embodiments, the location information of the first device refers to the absolute location of the first device.

In some embodiments, the location information of the first device may include horizontal location information and vertical location information of the first device.

In some embodiments, the location information of the first device may include whether the first device is indoors or outdoors.

In some embodiments, the first device may determine its own location information.

In some embodiments, the first device may determine its own location information based on a global navigation satellite system (GNSS) device.

In some embodiments, in a case where the first device is not a mobile device, the location information of the first device may be obtained through precise measurements taken when the device was deployed.

In some embodiments, timing information refers to precise time information. In some embodiments, timing information may be obtained via GNSS devices or time synchronization over a communication transmission network.

Through the above method, the second device is capable of obtaining the location and/or timing information of the first device, enabling the second device to further determine its own location based on the location of first device and/or to calibrate its own time using the timing information.

In some embodiments, the first device may also transmit coverage area information of the first device to at least one second device. The coverage area information is used to indicate characteristics of the coverage area of the first device.

Accordingly, the second device receives the coverage area information of the first device from the first device, wherein the coverage area information is used to indicate the characteristics of the coverage area of the first device.

In some embodiments, since the first device has a limited communication range, its coverage area is not infinite. The first device may not be able to ascertain the characteristics of areas outside its coverage area, however, the first device may indicate the characteristics of its coverage area to the second device, thereby assisting the second device in completing sensing measurements.

In some embodiments, the first device has a communication connection with a second device located within the coverage area of the first device.

In some embodiments, the terrain and buildings within the coverage area of the first device may be highly complex. As a result, the sensing signals transmitted by the second device may be affected by environmental factors, leading to suboptimal sensing results. Therefore, the first device may transmit its coverage area information to the second device, enabling the second device to refer to this information in determining how to transmit sensing signals. The coverage area information is used to indicate the characteristics of the coverage area of the first device.

In some embodiments, the coverage area information of the first device includes at least one of:
a size of the coverage area;
a shape of the coverage area;
building information within the coverage area;
road information within the coverage area; or
a map of the coverage area.

It should be noted that the above content is merely an example of coverage area information of the first device, the coverage area information of the first device may also include other information that reflects characteristics of the coverage area of the first device, which is not limited in the present disclosure.

In some embodiments, the size of the coverage area refers to the area extent of the coverage area of the first device. For example, the size of the coverage area is 200 m².

In some embodiments, shape of the coverage area refers to the geometric shape of the coverage area of the first device. For example, shape of the coverage area is elliptical.

In some embodiments, building information within the coverage area refers to the distribution of buildings within the coverage area of the first device. In some embodiments, a first sub-area within the coverage area features a dense distribution of buildings, and a second sub-area within the coverage area features a sparse distribution of buildings. In some embodiments, the first sub-area features predominantly low-rise buildings, and the second sub-area features predominantly high-rise buildings. In some embodiments, the first sub-area features predominantly low-rise buildings with a building distribution coefficient, and the second sub-area features predominantly high-rise and densely distributed buildings. In practical scenarios, the distribution of buildings within a given region may be far more complex and variable, the examples provided here are merely illustrative of several possible scenarios.

In some embodiments, the road information within the coverage area includes road features within the coverage area of the first device. For example, the road information within the coverage area includes major roads within the coverage area.

In some embodiments, the map of the coverage area may implicitly include information about terrain, buildings, roads, and other aspects of the coverage area. The terminal device may determine information about these various aspects such as terrain, buildings, and roads based on the map of the coverage area provided in the coverage-area information.

In some embodiments, in a case where the coverage area information of the first device is a map of the coverage area, the second device may obtain information such as the size, shape, building information, and road information of the coverage area based on the map of the coverage area.

In some embodiments, coverage area information may be used to indicate a three-dimensional digital map of the coverage area.

Using the methods described above, the second device may obtain coverage area information from the first device and subsequently determine the characteristics of the coverage area. Based on these characteristics of coverage area, the second device may determine the transmission and/or reception configuration of sensing signals based on the characteristics of the coverage area. For example, based on the distribution of buildings within the coverage area, the second device may decide which antenna panel to use for transmitting and/or receiving sensing signals. For example, the buildings in sub-area 1 of the coverage area are sparsely distributed, the second device may use the antenna panel oriented toward sub-area 1 to transmit and/or receive a sensing signal.

In some embodiments, since a plurality of second devices may be present within the coverage area, during coordinated sensing among the plurality of second devices, in a case where distance between the plurality of second devices is relatively small, the transmission and/or reception of sensing signals by each second device may be affected, thereby causing interference to all of them. Therefore, the first device may select one or more target second devices from among the plurality of second devices and inform these target second devices of related information of the other second devices, enabling the target second devices to assist the first device in mitigating the aforementioned interference.

In some embodiments, the first device transmits second information to the target second device, where the second information is used to indicate related information of at least one other second device located in the vicinity of the target second device. In some embodiments, the target second device refers to the second device determined by the first device from at least one second device.

Accordingly, the second device receives second information from the first device, where the second information is used to indicate related information of at least one other second device in the vicinity of the second device.

In some embodiments, other second devices in the vicinity of the second device may refer to second devices that are no more than a first threshold distance away from the second device. The first threshold may be predefined or configured by the first device, the present disclosure does not impose any limitations in this regard.

In some embodiments, in a case where the first threshold is configured by the first device, the first threshold may be determined based on the communication capabilities of the second device or be configured based on the environment in which the second device is located.

In some embodiments, in a case where the second device has strong communication capabilities, the first threshold is higher; in a case where the second device has weak communication capabilities, the first threshold is lower. In some embodiments, in a case where the environment in which the second device is located significantly affects the transmission of wireless signals, for example, the buildings are densely distributed, the first threshold is smaller; in a case where the environment in which the second device is located has little impact on wireless signal transmission, for example, the environment is relatively open, the first threshold is larger.

In some embodiments, other second devices in the vicinity of the second device can be partitioned by the first device.

In some embodiments, the first device divides the coverage area into several subareas based on the distribution of second devices within the coverage area, determines one second device in each subarea, and transmits second information to that second device. The second information includes related information of other second devices within the same subarea.

In some embodiments, other second devices refer to second devices other than the target second device.

In some embodiments, in a case where at least one second device includes a plurality of target second devices, the other second devices refer to all second devices except for the plurality of target second devices.

In some embodiments, the related information of other second devices includes at least one of: device information of the other second devices and time-frequency resource allocated to the other second devices. In some embodiments, in a case where the first device allocates time-frequency resource to the other second devices, the related information of the other second devices includes the time-frequency resource allocated to the other second devices. In some embodiments, in a case where the first device does not allocate time-frequency resource to the other second devices, the related information of the other second devices does not include the time-frequency resource allocated to the other second devices. The target second device may determine the time-frequency domain locations for transmitting and/or receiving sensing signals by other second devices based on the time-frequency resources allocated to the other second devices, thereby assisting the first device in eliminating interference among the various second devices.

In some embodiments, the device information includes at least one of: the sensing capability of the second device, and the relative position between the second device and the sensing target, and the information about the environment in which the second device is located.

In some embodiments, the device information may also include location information of the second device and location information of the sensing target.

In some embodiments, the sensing capability of the second device includes a feature for which sensing is supported by the second device and a parameter of the second device.

In some embodiments, the feature for which sensing is supported by the second device include at least one of: a position, a size, a shape, a surface material, a speed, an acceleration, a movement direction, a rotation period, a vibration frequency, or a movement trajectory of the sensing target.

The position of the sensing target refers to the precise position of the sensing target, which may be either the absolute position of the sensing target or relative position between the sensing target and the second device. The size and shape of the sensing target refer to external geometric characteristics of the sensing target. The surface material of the sensing target may be determined based on the reflection coefficient for the sensing signal. The speed, acceleration, movement direction, rotation period, vibration frequency, and movement trajectory of the sensing target may all be determined based on the position of the sensing target at different points in time.

It should be noted that the above description merely provides illustrative examples of the features for which sensing is supported by the second device, the second device may also support sensing of other features, the present disclosure does not impose any limitations in this regard.

In some embodiments, the parameter of the second device includes at least one of: a number of antennas, an antenna gain, a bandwidth of an antenna, a bandwidth of a radio frequency link, a maximum transmit power, a self-interference cancellation suppression ratio, a main lobe width, a side lobe position, a number of side lobes, or a relative power of a beam formed by a beamforming technology.

The number of antennas, antenna gain, and bandwidth of the antenna are the relevant parameters of the antenna of the second device. Before being transmitted, a wireless signal must pass sequentially through the RF link and the antenna. Therefore, the bandwidth of the wireless signal is influenced by both the bandwidth of the antenna and the bandwidth of the radio frequency link. In general, the bandwidth of the wireless signal is the smaller one of the bandwidth of the antenna and the bandwidth of the radio frequency link. The maximum transmit power refers to the highest transmit power supported by the terminal device. In the self-transmitting and self-receiving sensing scenario, the second device may be subject to interference from its own transmitted sensing signals. The self-interference cancellation suppression ratio is used to indicate the capability of the second device for self-interference cancellation.

In the case where the second device is equipped with a plurality of antennas, beamforming technology may be applied. The beam formed by beamforming technology consists of a main lobe and side lobes, with the main lobe having the highest power. The main lobe width is related to the beam frequency, while the separation between the side lobe and the main lobe is generally greater than 20 dB. A smaller separation may potentially affect the main lobe. In a scenario where the second devices are distributed relatively densely, the direction of certain side lobes may also be aligned toward other second devices, thereby interfering with the transmission and/or reception of sensing signals by those other devices. The relative power refers to the relative power between the main lobe and the side lobes.

The first device acquires the sensing capability of a second device. Based on a comprehensive consideration of the sensing capabilities of a plurality of second devices, the first device determines the time-frequency resources to be allocated to the second devices. This approach minimizes mutual interference among the second devices and enables coordinated management of the plurality of second devices.

In some embodiments, the position of the sensing target includes at least one of: an absolute position of the sensing target, or a relative position between the sensing target and the second device. In some embodiments, the absolute position of the sensing target may be composed of a horizontal absolute position and a vertical absolute position. In some embodiments, the relative position between the sensing target and the second device may be composed of a horizontal relative position and a vertical relative position between the sensing target and the second device.

Based on the position of the sensing target, the first device may determine a second device for performing sensing measurement on the sensing target by comprehensively considering positions and sensing capabilities of a plurality of second devices, as well as coverage area information of the first device, thereby ensuring the accuracy of the sensing results.

Through the above method, the second device is capable of acquiring related information of at least one other second device in its vicinity. Based on this related information, the second device assists the first device in eliminating interference caused by a plurality of sensing signals to other second devices, thereby improving the accuracy of the sensing results.

In some embodiments, the first device may also respectively transmit third information to at least one second device. The third information transmitted to the target second device is used to instruct the target second device to report sensing information. The sensing information is acquired based on sensing signals from the sensing target.

Accordingly, the second device receives the third information from the first device. The third information is used to instruct the second device to report sensing information, wherein the sensing information is acquired based on sensing signals from the sensing target.

In some embodiments, the second device transmits sensing information to the first device.

Accordingly, the first device receives sensing information respectively from at least one second device.

In some embodiments, the sensing information includes a sensing result. In some embodiments, after receiving the sensing signal, the second device determines the sensing result of the sensing target based on the sensing signal and carries the sensing result in the sensing information.

In some embodiments, the sensing information does not include the sensing result. In some embodiments, the first device determines the sensing result of the sensing target based on the sensing information. In some embodiments, the sensing information does not include the sensing result but instead includes sensing data obtained by the second device through measurement of the sensing signal. The first device determines the sensing result based on the sensing data included in the sensing information.

In some embodiments, the first device determines the sensing result of the sensing target based on sensing information respectively from at least one second device. In some embodiments, the first device acquires the sensing result of the sensing target by combining the sensing results in the sensing information from the second devices. In some embodiments, the first device determines the sensing result of the sensing target based on the sensing data contained in the sensing information from the second devices.

In some embodiments, the sensing information includes both the sensing result and the sensing data obtained by the second device through measurement of the sensing signal.

In some embodiments, the sensing information carries location information of the second device.

In some embodiments, the second device has the capability to determine its own location information. In some embodiments, the second device may determine its precise location and timing information via GNSS. In some embodiments, the second device may obtain its approximate location using network-based positioning technologies, such as multi-point time difference of arrival (TDOA), and acquire timing information via network time synchronization. In some embodiments, the second device may acquire location information and timing information from neighboring devices via a device-to-device link (e.g., sidelink).

Using the above method, the first device may instruct the second device to report sensing information, thereby acquiring the sensing result for the sensing target.

In some embodiments, the first device may also respectively transmit first configuration information to at least one second device. The first configuration information transmitted to the target second device is used to indicate configuration information for the target second device to perform a sensing measurement and/or sensing target information. The sensing measurement includes transmitting a sensing signal and/or receiving a sensing signal.

Accordingly, the second device receives first configuration information from the first device. The first configuration information is used to indicate configuration information for the second device to perform a sensing measurement and/or sensing target information. The sensing measurement includes transmitting a sensing signal and/or receiving a sensing signal.

In some embodiments, sensing measurement refers to the process of transmitting a sensing signal to a sensing target, receiving a sensing signal from the sensing target, and finally acquiring a sensing result of the sensing target.

In some embodiments, the first configuration information is further used to indicate at least one of:
a number of times of the sensing measurement;
a period of the sensing measurement;
an effective duration of the time-frequency resource;
ambiguous position information of a sensing target;
a transmit power for transmitting the sensing signal on the time-frequency resource; or
an antenna transmission mode for transmitting the sensing signal on the time-frequency resource.

In some embodiments, the configuration information for the second device to perform sensing measurement includes at least one of:
a number of times of the sensing measurement;
a period of the sensing measurement; or
an effective duration of the time-frequency resource.

In some embodiments, the first device may configure the second device with configuration information for multiple sensing measurements. For example, the first device may allocate time-frequency resources required for multiple sensing measurements at once and configure the second device with the number of sensing measurements and/or the period of the measurement.

In some embodiments, the sensing measurement by the second device may be either periodic or aperiodic.

In some embodiments, in a case where the sensing measurement by the second device is periodic, a time for the second device to perform the sensing measurement may be determined based on the period of the sensing measurement.

In some embodiments, in a case where the sensing measurement by the second device is aperiodic, an effective duration for the time-frequency resource needs to be configured for the second device, and the second device performs the sensing measurement within this effective duration of the time-frequency resource.

In some embodiments, the first configuration information is further used to instruct the second device to begin performing a sensing measurement.

In some embodiments, after the first configuration information, the first device transmits third configuration information to the second device, wherein the third configuration information is used to instruct the second device to begin performing a sensing measurement.

In some embodiments, the first device may further respectively transmit second configuration information to at least one second device, wherein the second configuration information transmitted to the target second device is used to instruct the target second device to stop performing the sensing measurement.

Accordingly, the second device receives the second configuration information from the first device, wherein the second configuration information is used to instruct the second device to stop performing the sensing measurement.

The time for the second device to perform the sensing measurement may be determined by using the above first configuration information, second configuration information, and third configuration information, or may be determined based on the number of times of the sensing measurement, a period of the sensing measurement, and the effective duration of time-frequency resource, thereby achieving coordinated management of the plurality of second devices by the first device.

In some embodiments, the first configuration information may indicate sensing target information to the second device.

In some embodiments, the sensing target information includes at least one of:
ambiguous position information of a sensing target;
a transmit power for transmitting the sensing signal on the time-frequency resource; or
an antenna transmission mode for transmitting the sensing signal on the time-frequency resource.

In some embodiments, the ambiguous position information of the sensing target is used to provide the second device with an approximate location of the sensing target, or to provide the second device with a position range where the sensing target is located, thereby helping the second device quickly locating the position of the sensing target and reducing consumption caused by the second device measuring the surrounding environment.

In some embodiments, in a case where the sensing target is in motion, the first device may adjust the second device used for sensing measurement based on a movement trajectory of the sensing target. For example, after the sensing target moves from sub-area 1 to sub-area 2 within the coverage area of the first device, the first device dispatches the second device in sub-area 2 to perform sensing measurement on the sensing target.

In some embodiments, the antenna transmission mode for transmitting the sensing signal on time-frequency resource may include the number of antennas for transmitting the sensing signal on the time-frequency resource, the spatial diversity mode adopted (such as codebook-based spatial diversity), and beamforming beam characteristics, and the like.

In some embodiments, in a case where the second device includes only one antenna, the antenna mode used by the second device to transmit the sensing signal on time-frequency resources is a single-antenna transmission mode. In a case where the second device includes a plurality of antennas, the antenna mode used by the second device to transmit a sensing signal on time-frequency resources may be a multi-antenna transmission mode.

In some embodiments, before the first device transmits first information to the second device, the second device may transmit device information of the second device to the first device.

Accordingly, the first device obtains device information of each of a plurality of second devices.

In some embodiments, the first device determines at least one second device from among a plurality of second devices based on the respective device information of each of the plurality of second devices.

In some embodiments, the first device respectively allocates corresponding time-frequency resource to at least one second device.

With regard to the method by which the first device determines at least one second device from among the plurality of second devices, the present disclosure does not impose any limitations.

In some embodiments, the first device may determine at least one second device based on the location information of the sensing target and the location information of the second device.

In some embodiments, the first device may determine at least one second device based on a required sensing result to be acquired and the sensing capability of the second device.

In some embodiments, the device information of the second device is actively reported by the second device to the first device.

In some embodiments, the device information of the second device is transmitted to the first device after receiving request information from the first device. The request information from the first device may also be other types of information, such as indication information or configuration information, which is not limited in the present disclosure.

In some embodiments, the second device may further transmit a fourth information to the first device, where the fourth information includes at least one of: location information of the second device, timing information of the second device, or the accuracy of the location information of the second device.

Accordingly, the first device receives fourth information respectively from at least one second device. The fourth information transmitted by the target second device includes at least one of: location information of the target second device, timing information of the target second device, or the accuracy of the location information of the target second device.

In some embodiments, the accuracy of the location information of the second device is related to the method by which the second device determines its own location information.

As an example, when the second device determines its precise location and timing information via GNSS, the accuracy of the location information of the second device is "high." When the second device acquires its approximate location using network-based positioning technologies such as multi-point TDOA and acquires timing information through network time synchronization, the accuracy of the location information of the second device is "medium." When the second device acquires location information and timing information from neighboring devices via a device-to-device link (e.g., sidelink), the accuracy of the location information of the second device is "low."

In some embodiments, the fourth information may further include device information of the second device.

In some embodiments, the first device may also choose not to transmit the third information to the second device; instead, after completing the sensing measurement, the second device may autonomously transmit the sensing information to the first device.

As an example, the second device may autonomously transmit sensing information to the first device upon elapse of a period of the sensing measurement.

Through the above method, the second device actively reports device information and/or sensing information, which may assist the first device in achieving coordinated management of a plurality of second devices while reducing signaling interactions.

In some embodiments, the first device is further configured to: cooperate with a third device to acquire a sensing result of a sensing target, wherein the third device is another device having a same or similar function as the first device.

In some embodiments, a coverage area of the third device and a coverage area of the first device have an overlapping area, and the sensing target is located within the overlapping area.

In some embodiments, in a case where the sensing target is moving with a movement trajectory from the coverage area of the first device toward the coverage area of the third device, the first device may communicate with the third device to inform the third device of a sensing result for the sensing target obtained by the first device. The third device may acquire a required sensing result based on the sensing result informed by the first device and a sensing result acquired by the third device itself performing a sensing measurement on the sensing target. For example, to acquire a movement trajectory of the sensing target, the first device determines a movement trajectory of the sensing target within the coverage area of the first device, the third device determines a movement trajectory of the sensing target within the coverage area of the third device, and the movement trajectory of the sensing target is obtained by combining the two movement trajectories.

In some embodiments, in a case where the sensing target is moving with a movement trajectory from the coverage area of the first device toward the coverage area of the third device, the first device may communicate with the third device to inform the third device of the data obtained

In some embodiments, the first device may also obtain, from the third device, sensing information obtained by performing a sensing measurement on the sensing target. Based on the sensing information obtained by the first device itself performing a sensing measurement on the sensing target, the first device may determine a sensing result.

In some embodiments, a coverage area of the third device and a coverage area of the first device have an overlapping area, and both a second device communicating with the first device and a second device communicating with the third device are present within the overlapping area. The first device may schedule the second device communicating with the first device to perform a sensing measurement on the sensing target, and then transmit sensing information for the sensing target to the third device to assist the third device in performing a sensing measurement on the sensing target.

In some embodiments, a coverage area of the third device and a coverage area of the first device have an overlapping area, and both a second device communicating with the first device and a second device communicating with the third device are present within the overlapping area. The first device may request the third device to assist the first device in performing a sensing measurement on the sensing target. For example, the first device may request the third device to schedule the second device communicating with the third device to perform a sensing measurement on the sensing target.

By using the method described above, when a sensing target passes through the boundary zone between two coverage areas, a sensing measurement on the sensing target can still be achieved via mutual assistance between devices in the two coverage areas, thereby avoiding loss track of the sensing target during the sensing measurement process and improving the accuracy of the sensing results.

In the method embodiments described above, the technical solution of the present disclosure has been introduced and explained solely from the perspective of interaction between the first device and the second device. The steps performed by the first device as described above may be implemented independently as a wireless sensing method on the first-device side, while the steps performed by the second device may be implemented independently as a wireless sensing method on the second-device side. Furthermore, the embodiments provided herein may be combined arbitrarily to form new embodiments, all of which fall within the protection scope of the present disclosure.

The following is a description of the apparatus embodiment of the present disclosure, which may be used to implement the method embodiment of the present disclosure. For details not disclosed in the apparatus embodiment, reference may be made to the method embodiment of the present disclosure.

FIG. 9 illustrates a block diagram of a wireless sensing apparatus according to some embodiments of the present disclosure. This apparatus has a function of implementing the wireless sensing method on the first-device side described above. Such function may be implemented either through hardware or through hardware executing corresponding software. The apparatus may be the first device described above, or the apparatus may be disposed in the first device. As illustrated in FIG. 9, the apparatus 900 may include a transmitting module 910.

The transmitting module 910 is configured to respectively transmit first information to at least one of a plurality of second devices, wherein the first information transmitted to a target second device of the at least one of the plurality of second devices is used to indicate a time-frequency resource allocated to the target second device, wherein the time-frequency resource is used for the target second device to transmit a sensing signal and/or receive a sensing signal.

In some embodiments, the transmitting module 910 is further configured to transmit location information and/or timing information of the first device to the at least one of the plurality of second devices.

In some embodiments, the transmitting module 910 is further configured to transmit coverage area information of the first device to the at least one of the plurality of second devices, wherein the coverage area information is used to indicate characteristics of a coverage area of the first device.

In some embodiments, the coverage area information includes at least one of:
a size of the coverage area;
a shape of the coverage area;
building information within the coverage area;
road information within the coverage area; or
a map of the coverage area.

In some embodiments, the device 900 further includes a processing module (not illustrated in the figure).

The processing module is configured to acquire device information of each of the plurality of second devices, wherein the device information includes at least one of: a sensing capability of the second device, a relative position between the second device and a sensing target, or environmental information in which the second device is located.

The processing module is further configured to determine the at least one of the plurality of second devices based on the device information of the each of the plurality of second devices.

The processing module is further configured to respectively allocate corresponding time-frequency resource to the at least one of the plurality of second devices.

In some embodiments, the sensing capability of the second device includes a feature for which sensing is supported by the second device and a parameter of the second device.

In some embodiments, the feature for which sensing is supported by the second device includes at least one of: a position, a size, a shape, a surface material, a speed, an acceleration, a movement direction, a rotation period, a vibration frequency, or a movement trajectory of the sensing target.

The parameter of the second device includes at least one of: a number of antennas, an antenna gain, a bandwidth of an antenna, a bandwidth of a radio frequency link, a maximum transmit power, a self-interference cancellation suppression ratio, a main lobe width, a side lobe position, a number of side lobes, or a relative power of a beam formed by a beamforming technology.

In some embodiments, the position of the sensing target includes at least one of: an absolute position of the sensing target, or a relative position between the sensing target and the second device.

In some embodiments, the transmitting module 910 is further configured to transmit second information to the target second device, wherein the second information is used to indicate related information of at least one other second device surrounding the target second device.

In some embodiments, the related information of the other second device includes at least one of: device information of the other second device or a time-frequency resource allocated to the other second device.

In some embodiments, for any two second devices configured to transmit a sensing signal, the two second devices are allocated different time-domain resources and/or different frequency-domain resources.

In some embodiments, the transmitting module 910 is further configured to transmit third information to the at least one of the plurality of second devices, wherein the third information transmitted to the target second device is used to instruct the target second device to report sensing information, wherein the sensing information is acquired based on a sensing signal from a sensing target.

The receiving module is configured to receive sensing information respectively transmitted from the at least one of the plurality of second devices.

In some embodiments, the processing module is configured to determine a sensing result of the sensing target based on the sensing information respectively transmitted from the at least one of the plurality of second devices.

In some embodiments, the transmitting module 910 is further configured to respectively transmit first configuration information to the at least one of the plurality of second devices, wherein the first configuration information transmitted to the target second device is used to indicate configuration information for the target second device to perform a sensing measurement and/or sensing target information, wherein the sensing measurement includes transmitting a sensing signal and/or receiving a sensing signal.

In some embodiments, the first configuration information is used to indicate at least one of:
a number of times of the sensing measurement;
a period of the sensing measurement;
an effective duration of the time-frequency resource;
ambiguous position information of a sensing target;
a transmit power for transmitting the sensing signal on the time-frequency resource; or
an antenna transmission mode for transmitting the sensing signal on the time-frequency resource.

In some embodiments, the transmitting module 910 is further configured to respectively transmit second configuration information to the at least one of the plurality of second devices, wherein the second configuration information transmitted to the target second device is used to instruct the target second device to stop the sensing measurement.

In some embodiments, the first device is further configured to: transmit a sensing signal to a sensing target, and/or receive a sensing signal from the sensing target.

In some embodiments, the first device is further configured to: cooperate with a third device to acquire a sensing result of a sensing target, wherein the third device is another device having a same or similar function as the first device.

In some embodiments, a coverage area of the third device and a coverage area of the first device have an overlapping area, and the sensing target is located within the overlapping area.

In some embodiments, the receiving module is configured to receive fourth information respectively transmitted from the at least one of the plurality of second devices, wherein the fourth information transmitted from the target second device includes at least one of: location information of the target second device, timing information of the target second device, or an accuracy of the location information of the target second device.

In the technical solution according to the present disclosure, the first device transmits first information to the target second device to indicate the time-frequency resource allocated to the target second device, enabling the target second device to transmit and/or receive a sensing signal on the corresponding time-frequency resource. The first device is capable of coordinating the management of a plurality of second devices, and by respectively allocating time-frequency resources to the plurality of second devices, thereby enabling the plurality of second devices to perform coordinated sensing, thereby improving the accuracy of the sensing result.

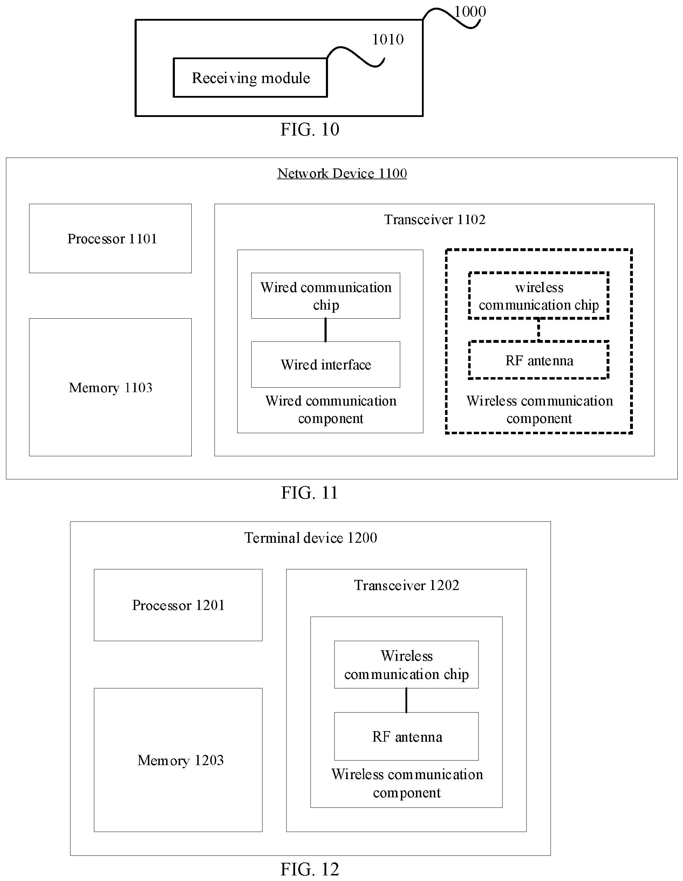

FIG. 10 illustrates a block diagram of a wireless sensing apparatus according to some embodiments of the present disclosure. This apparatus has a function of implementing the wireless sensing method on the second-device side described above. Such function may be implemented either through hardware or through hardware executing corresponding software. The apparatus may be the second device described above, or the apparatus may be disposed in the second device. The second device is used for transmitting and/or receiving sensing signals. As illustrated in FIG. 10, the apparatus 1000 may include a receiving module 1010.

The receiving module 1010 is configured to receive first information from a first device, wherein the first information is used to indicate a time-frequency resource allocated to the second device, wherein the time-frequency resource is used to transmit a sensing signal and/or receive a sensing signal.

In some embodiments, the receiving module 1010 is further configured to receive location information and/or timing information of the first device from the first device.

In some embodiments, the receiving module 1010 is further configured to receive coverage area information from the first device, wherein the coverage area information is used to indicate characteristics of a coverage area of the first device.

In some embodiments, the coverage area information includes at least one of:
a size of the coverage area;
a shape of the coverage area;
building information within the coverage area;
road information within the coverage area; or
a map of the coverage area.

In some embodiments, the apparatus 1000 further includes a transmitting module (not illustrated in the figure).

The transmitting module is configured to transmit device information of the second device to the first device, wherein the device information includes at least one of: a sensing capability of the second device, a relative position between the second device and a sensing target, or environmental information in which the second device is located.

In some embodiments, the sensing capability of the second device includes a feature for which sensing is supported by the second device and a parameter of the second device.

In some embodiments, the feature for which sensing is supported by the second device includes at least one of: a position, a size, a shape, a surface material, a speed, an acceleration, a movement direction, a rotation period, a vibration frequency, or a movement trajectory of the sensing target.

The parameter of the second device includes at least one of: a number of antennas, an antenna gain, a bandwidth of an antenna, a bandwidth of a radio frequency link, a maximum transmit power, a self-interference cancellation suppression ratio, a main lobe width, a side lobe position, a number of side lobes, or a relative power of a beam formed by a beamforming technology.

In some embodiments, the position of the sensing target includes at least one of: an absolute position of the sensing target, or a relative position between the sensing target and the second device.

In some embodiments, the receiving module 1010 is further configured to receive second information from the first device, wherein the second information is used to indicate related information of at least one other second device surrounding the second device.

In some embodiments, the related information of the other second device includes at least one of: device information of the other second device or time-frequency resource allocated to the other second device.

In some embodiments, the receiving module 1010 is further configured to receive third information from the first device, wherein the third information is used to instruct the second device to report sensing information, wherein the sensing information is acquired based on a sensing signal from a sensing target.

The transmitting module is configured to transmit the sensing information to the first device.

In some embodiments, the sensing information carries location information of the second device.

In some embodiments, the receiving module 1010 is further configured to receive first configuration information from the first device, wherein the first configuration information is used to indicate configuration information for the second device to perform a sensing measurement and/or sensing target information, wherein the sensing measurement includes transmitting a sensing signal and/or receiving a sensing signal.

In some embodiments, the first configuration information is further used to indicate at least one of:
a number of times of the sensing measurement;
a period of the sensing measurement;
an effective duration of the time-frequency resource;
ambiguous position information of a sensing target;
a transmit power for transmitting the sensing signal on the time-frequency resource; or
an antenna transmission mode for transmitting the sensing signal on the time-frequency resource.

In some embodiments, the receiving module 1010 is further configured to receive the second configuration information from the first device, wherein the second configuration information is used to instruct the second device to stop the sensing measurement.

In some embodiments, the transmitting module is configured to transmit fourth information to the first device, wherein the fourth information includes at least one of: location information of the second device, timing information of the second device, or an accuracy of the location information of the second device.

In the technical solution according to the present disclosure, the second device receives first information from the first device, determines the time-frequency resource corresponding to the second device, and then transmits a sensing signal and/or receives a sensing signal on the time-frequency resource. This enables the first device to coordinate the management of a plurality of second devices, and enables the plurality of second devices to perform coordinated sensing by the first device respectively allocating time-frequency resources to the plurality of second devices, thereby improving the accuracy of the sensing result.

It should be noted that the apparatus according to the above embodiments implements its functions by merely illustrating the division of the above functional modules. In practice, the above functions may be assigned to and completed by different functional modules as needed. That is, the device may be divided into different functional modules to implement all or part of the functions as described above.

As for the apparatus in the above embodiments, the specific way in which each module performs the operations has been described in detail in the method embodiments, which is not described herein any further. For details not described in the apparatus embodiments, reference may be made to the above method embodiments.

FIG. 11 illustrates a schematic diagram of the structure of first device 1100 according to some embodiments of the present disclosure. The first device 1100 may be used to perform the method steps performed by the first device in the above embodiments. The first device 1100 may include: a processor 1101, a transceiver 1102, and a memory 1103. The transceiver 1102 is configured to implement transmitting or receiving functions, such as performing the functions of the above transmitting module 910. The processor 1101 may be configured to implement other processing functions or to control transmitting and/or receiving.

The processor 1101 includes one or more processing cores, and the processor 2101 runs various functional applications and performs information processing by running software programs and modules.

The transceiver 1102 includes a receiver and a transmitter. For example, the transceiver 1102 may include a wired communication component, which may include a wired communication chip and a wired interface (such as a fiber interface). In some embodiments, the transceiver 1102 may also include a wireless sensing component, which may include a wireless sensing chip and a radio frequency (RF) antenna.

The memory 1103 may be connected to processor 1101 and transceiver 1102.

The memory 1103 may be configured to store one or more computer programs executed by a processor, and processor 1101 is configured to execute the one or more computer programs to implement the various steps performed by the first device in the above method embodiments.

In addition, memory 1103 may be practiced by any type of volatile or non-volatile storage device, or a combination thereof. The volatile or non-volatile storage device includes, but is not limited to: a disk or optical disc, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

In some embodiments, the transceiver 1102 is configured to respectively transmit first information to at least one of a plurality of second devices, wherein the first information transmitted to a target second device of the at least one of the plurality of second devices is used to indicate a time-frequency resource allocated to the target second device, wherein the time-frequency resource is used for the target second device to transmit a sensing signal and/or receive a sensing signal.

For details not described in detail in this embodiment, reference may be made to the embodiments described above, which are not repeated herein.

FIG. 12 illustrates a structural schematic diagram of second device according to some embodiments of the present disclosure. The second device 1200 may include: a processor 1201, a transceiver 1202, and a memory 1203. The transceiver 1202 is configured to implement transmitting or receiving functions, such as performing the functions of the above receiving module 1010. The processor 1201 may be configured to perform other processing functions or to control transmitting and/or receiving, such as implementing the functions of the above processing module.

The processor 1201 includes one or more processing cores, and the processor 1201 executes various functional applications and performs information processing by running software programs and modules.

The transceiver 1202 may include a receiver and a transmitter. For example, the receiver and transmitter may be implemented as a single wireless sensing component, which may include a wireless sensing chip and an RF antenna.

The memory 1203 may be connected to processor 1201 and transceiver 1202.

The memory 1203 may be configured to store one or more computer programs executed by a processor, and processor 1201 is configured to execute the one or more computer programs to implement the various steps described in the above method embodiments.

In some embodiments, the transceiver 1202 is configured to receive first information from a first device, wherein the first information is used to indicate a time-frequency resource allocated to the first device, wherein the time-frequency resource is used for transmitting a sensing signal and/or receiving a sensing signal.

For details not described in detail in this embodiment, reference may be made to the embodiments described above, which are not repeated herein.

In addition, the memory may be practiced by any type of volatile or non-volatile storage device, or a combination thereof. The volatile or non-volatile storage device includes, but is not limited to: a disk or optical disc, an EEPROM, an EPROM, a SRAM, a ROM, a magnetic memory, a flash memory, and a PROM.

Some embodiments of the present disclosure further provide a computer-readable storage medium storing one or more computer programs. The one or more computer programs, when executed by a processor, cause the processor to perform the wireless sensing method on the first device side described above, or to perform the wireless sensing method on the second device side described above. In some embodiments, the computer-readable storage medium may include: a ROM, a random-access memory (RAM), a solid-state drive (SSD), an optical disc or the like. The RAM may include a resistance random access memory (ReRAM) and a dynamic random-access memory (DRAM).

Some embodiments of the present disclosure further provide a chip. The chip includes programmable logic circuitry and/or one or more program instructions. The chip, when running, is caused to perform the wireless sensing method on the first device side described above, or to perform the wireless sensing method on the second device side described above.

Some embodiments of the present disclosure further provide a computer program product. The computer program product includes one or more computer instructions stored in a computer-readable storage medium. The one or more computer instructions, when read from the computer-readable storage medium and executed by a processor, cause the processor to perform the wireless sensing method on the first device side described above, or to perform the wireless sensing method on the second device side described above.

It should be understood that in the embodiments of the present disclosure, the term "indication" may refer to a direct indication, an indirect indication, or an indication that an associated relationship is present. For example, "A indicates B" may mean that A directly indicates B, for example, B may be obtained from A; or may mean that A indirectly indicates B, for example, A indicates C through which B may be obtained; or may mean an association relationship is present between A and B.

In the description of the embodiments of the present disclosure, the term "corresponding" may indicate a direct or indirect corresponding relationship between two items, or it may indicate an associative relationship between the two items, or a relationship such as indicating and being indicated, or configuring and being configured.

In some embodiments of the present disclosure, the term "predefined" may be implemented by pre-storing corresponding codes, tables, or other data structures in devices (e.g., including a first device and a second device) that can be used to indicate relevant information. The present disclosure does not impose any specific limitations on the implementation method. For example, the term "predefined" may refer to "defined" in a protocol.

In some embodiments of the present disclosure, the term "protocol" may refer to standard protocols in the field of communications, such as the LTE protocol, the NR protocol, and related protocols applicable to future communication systems. The present disclosure does not impose any limitations in this regard.

The expression "a plurality of" herein refers to two or more. The term "and/or" describes an association relationship between associated objects and indicates that three types of relationships may exist. For example, the phrase "A and/or B" means (A), (B), or (A and B). The character "/" generally represents an "or" relationship between the associated objects.

The expression "greater than or equal to" herein may refer to either "greater than or equal to", or just "greater than", and the expression "less than or equal to" may refer to either "less than or equal to", or just "less than".

In addition, the serial numbers of the steps described herein merely illustrate one possible sequence of execution among the steps. In some embodiments, the above steps may also be executed in a sequence different from that indicated by the numbering. For example, two steps with different numbers may be executed simultaneously, or two steps with different numbers may be executed in an order opposite to that illustrated in the figure, the present disclosure does not impose any limitations in this regard.

Those skilled in the art should recognize that, in one or more of the examples described above, the functions disclosed in the embodiments of the present disclosure may be implemented by hardware, software, firmware, or any combination thereof. When implemented by software, these functions may be stored in a computer-readable medium or transmitted as one or more instructions or codes on the computer-readable medium. The computer-readable medium includes a computer storage medium and a communication medium. The communication medium includes any medium that facilitates the transfer of computer programs from one location to another. The storage medium may be any available medium accessible by a general-purpose computer or a special-purpose computer.

Described above are merely exemplary embodiments of the present disclosure and are not intended to limit the present disclosure. Any modifications, equivalent substitutions, or improvements made within the spirit and principles of the present disclosure shall fall within the protection scope of the present disclosure.

## Claims

1. A wireless sensing method, performed by a first device, the wireless sensing method comprising:
respectively transmitting first information to at least one of a plurality of second devices, wherein the first information transmitted to a target second device of the at least one of the plurality of second devices is used to indicate a time-frequency resource allocated to the target second device, wherein the time-frequency resource is used for the target second device to transmit a sensing signal and/or receive a sensing signal.

2. The wireless sensing method according to claim 1, further comprising:
transmitting location information and/or timing information of the first device to the at least one of the plurality of second devices.

3. The wireless sensing method according to claim 1 or 2, further comprising:
transmitting coverage area information of the first device to the at least one of the plurality of second devices, wherein the coverage area information is used to indicate characteristics of a coverage area of the first device.

4. The wireless sensing method according to claim 3, wherein the coverage area information comprises at least one of:
a size of the coverage area;
a shape of the coverage area;
building information within the coverage area;
road information within the coverage area; or
a map of the coverage area.

5. The wireless sensing method according to any one of claims 1 to 4, wherein prior to respectively transmitting the first information to the at least one of the plurality of second devices, the wireless sensing method further comprises:
acquiring device information of each of the plurality of second devices, wherein the device information comprises at least one of: a sensing capability of the second device, a relative position between the second device and a sensing target, or environmental information in which the second device is located;
determining the at least one of the plurality of second devices based on the device information of the each of the plurality of second devices; and
respectively allocating corresponding time-frequency resource to the at least one of the plurality of second devices.

6. The wireless sensing method according to claim 5, wherein the sensing capability of the second device comprises a feature for which sensing is supported by the second device and a parameter of the second device.

7. The wireless sensing method according to claim 6, wherein
the feature for which sensing is supported by the second device comprises at least one of: a position, a size, a shape, a surface material, a speed, an acceleration, a movement direction, a rotation period, a vibration frequency, or a movement trajectory of the sensing target;
the parameter of the second device comprises at least one of: a number of antennas, an antenna gain, a bandwidth of an antenna, a bandwidth of a radio frequency link, a maximum transmit power, a self-interference cancellation suppression ratio, a main lobe width, a side lobe position, a number of side lobes, or a relative power of a beam formed by a beamforming technology.

8. The wireless sensing method according to claim 7, wherein the position of the sensing target comprises at least one of: an absolute position of the sensing target, or a relative position between the sensing target and the second device.

9. The wireless sensing method according to any one of claims 1 to 8, further comprising:
transmitting second information to the target second device, wherein the second information is used to indicate related information of at least one other second device surrounding the target second device.

10. The wireless sensing method according to claim 9, wherein the related information of the other second device comprises at least one of: device information of the other second device or a time-frequency resource allocated to the other second device.

11. The wireless sensing method according to any one of claims 1 to 10, wherein for any two second devices configured to transmit a sensing signal, the two second devices are allocated different time-domain resources and/or different frequency-domain resources.

12. The wireless sensing method according to any one of claims 1 to 11, further comprising:
respectively transmitting third information to the at least one of the plurality of second devices, wherein the third information transmitted to the target second device is used to instruct the target second device to report sensing information, wherein the sensing information is acquired based on a sensing signal from a sensing target;
receiving sensing information respectively transmitted from the at least one of the plurality of second devices.

13. The wireless sensing method according to claim 12, further comprising:
determining a sensing result of the sensing target based on the sensing information respectively transmitted from the at least one of the plurality of second devices.

14. The wireless sensing method according to any one of claims 1 to 13, further comprising:
respectively transmitting first configuration information to the at least one of the plurality of second devices, wherein the first configuration information transmitted to the target second device is used to indicate configuration information for the target second device to perform a sensing measurement and/or sensing target information, wherein the sensing measurement comprises transmitting a sensing signal and/or receiving a sensing signal.

15. The wireless sensing method according to claim 14, wherein the first configuration information is used to indicate at least one of:
a number of times of the sensing measurement;
a period of the sensing measurement;
an effective duration of the time-frequency resource;
ambiguous position information of a sensing target;
a transmit power for transmitting the sensing signal on the time-frequency resource; or
an antenna transmission mode for transmitting the sensing signal on the time-frequency resource.

16. The wireless sensing method according to claim 14 or 15, further comprising:
respectively transmitting second configuration information to the at least one of the plurality of second devices, wherein the second configuration information transmitted to the target second device is used to instruct the target second device to stop the sensing measurement.

17. The wireless sensing method according to any one of claims 1 to 16, wherein the first device is further configured to: transmit a sensing signal to a sensing target, and/or receive a sensing signal from the sensing target.

18. The wireless sensing method according to any one of claims 1 to 17, wherein the first device is further configured to: cooperate with a third device to acquire a sensing result of a sensing target, wherein the third device is another device having a same or similar function as the first device.

19. The wireless sensing method according to claim 18, wherein a coverage area of the third device and a coverage area of the first device have an overlapping area, and the sensing target is located within the overlapping area.

20. The wireless sensing method according to any one of claims 1 to 19, further comprising:
receiving fourth information respectively transmitted from the at least one of the plurality of second devices, wherein the fourth information transmitted from the target second device comprises at least one of: location information of the target second device, timing information of the target second device, or an accuracy of the location information of the target second device.

21. A wireless sensing method, performed by a second device, the wireless sensing method comprising:
receiving first information from a first device, wherein the first information is used to indicate a time-frequency resource allocated to the second device, wherein the time-frequency resource is used to transmit a sensing signal and/or receive a sensing signal.

22. The wireless sensing method according to claim 21, further comprising:
receiving location information and/or timing information of the first device from the first device.

23. The wireless sensing method according to claim 21 or 22, further comprising:
receiving coverage area information from the first device, wherein the coverage area information is used to indicate characteristics of a coverage area of the first device.

24. The wireless sensing method according to claim 23, wherein the coverage area information comprises at least one of:
a size of the coverage area;
a shape of the coverage area;
building information within the coverage area;
road information within the coverage area; or
a map of the coverage area.

25. The wireless sensing method according to any one of claims 21 to 24, wherein prior to receiving the first information from the first device, the wireless sensing method further comprises:
transmitting device information of the second device to the first device, wherein the device information comprises at least one of: a sensing capability of the second device, a relative position between the second device and a sensing target, or environmental information in which the second device is located.

26. The wireless sensing method according to claim 25, wherein the sensing capability of the second device comprises a feature for which sensing is supported by the second device and a parameter of the second device.

27. The wireless sensing method according to claim 26, wherein
the feature for which sensing is supported by the second device comprises at least one of: a position, a size, a shape, a surface material, a speed, an acceleration, a movement direction, a rotation period, a vibration frequency, or a movement trajectory of the sensing target;
the parameter of the second device comprises at least one of: a number of antennas, an antenna gain, a bandwidth of an antenna, a bandwidth of a radio frequency link, a maximum transmit power, a self-interference cancellation suppression ratio, a main lobe width, a side lobe position, a number of side lobes, or a relative power of a beam formed by a beamforming technology.

28. The wireless sensing method according to claim 27, wherein the position of the sensing target comprises at least one of: an absolute position of the sensing target, or a relative position between the sensing target and the second device.

29. The wireless sensing method according to any one of claims 21 to 28, further comprising:
receiving second information from the first device, wherein the second information is used to indicate related information of at least one other second device surrounding the second device.

30. The wireless sensing method according to claim 29, wherein the related information of the other second device comprises at least one of: device information of the other second device or time-frequency resource allocated to the other second device.

31. The wireless sensing method according to any one of claims 21 to 30, further comprising:
receiving third information from the first device, wherein the third information is used to instruct the second device to report sensing information, wherein the sensing information is acquired based on a sensing signal from a sensing target;
transmitting the sensing information to the first device.

32. The wireless sensing method according to claim 31, wherein the sensing information carries location information of the second device.

33. The wireless sensing method according to any one of claims 21 to 32, further comprising:
receiving first configuration information from the first device, wherein the first configuration information is used to indicate configuration information for the second device to perform a sensing measurement and/or sensing target information, wherein the sensing measurement comprises transmitting a sensing signal and/or receiving a sensing signal.

34. The wireless sensing method according to claim 33, wherein the first configuration information is further used to indicate at least one of:
a number of times of the sensing measurement;
a period of the sensing measurement;
an effective duration of the time-frequency resource;
ambiguous position information of a sensing target;
a transmit power for transmitting the sensing signal on the time-frequency resource; or
an antenna transmission mode for transmitting the sensing signal on the time-frequency resource.

35. The wireless sensing method according to claim 33 or 34, further comprising:
receiving second configuration information from the first device, wherein the second configuration information is used to instruct the second device to stop the sensing measurement.

36. The wireless sensing method according to any one of claims 21 to 35, further comprising:
transmitting fourth information to the first device, wherein the fourth information comprises at least one of: location information of the second device, timing information of the second device, or an accuracy of the location information of the second device.

37. A wireless sensing apparatus, comprising:
a transmitting module, configured to respectively transmit first information to at least one of a plurality of second devices, wherein the first information transmitted to a target second device of the at least one of the plurality of second devices is used to indicate a time-frequency resource allocated to the target second device, wherein the time-frequency resource is used for the target second device to transmit a sensing signal and/or receive a sensing signal.

38. The wireless sensing apparatus according to claim 37, wherein
the transmitting module is further configured to transmit location information and/or timing information of the first device to the at least one of the plurality of second devices.

39. The wireless sensing apparatus according to claim 37 or 38, wherein
the transmitting module is further configured to transmit coverage area information of the first device to the at least one of the plurality of second devices, wherein the coverage area information is used to indicate characteristics of a coverage area of the first device.

40. The wireless sensing apparatus according to claim 39, wherein the coverage area information comprises at least one of:
a size of the coverage area;
a shape of the coverage area;
building information within the coverage area;
road information within the coverage area; or
a map of the coverage area.

41. The wireless sensing apparatus according to any one of claims 37 to 40, further comprising:
a processing module, configured to acquire device information of each of the plurality of second devices, wherein the device information comprises at least one of: a sensing capability of the second device, a relative position between the second device and a sensing target, or environmental information in which the second device is located;
the processing module is further configured to determine the at least one of the plurality of second devices based on the device information of the each of the plurality of second devices;
the processing module is further configured to respectively allocate corresponding time-frequency resource to the at least one of the plurality of second devices.

42. The wireless sensing apparatus according to claim 41, wherein the sensing capability of the second device comprises a feature for which sensing is supported by the second device and a parameter of the second device.

43. The wireless sensing apparatus according to claim 42, wherein
the feature for which sensing is supported by the second device comprises at least one of: a position, a size, a shape, a surface material, a speed, an acceleration, a movement direction, a rotation period, a vibration frequency, or a movement trajectory of the sensing target;
the parameter of the second device comprises at least one of: a number of antennas, an antenna gain, a bandwidth of an antenna, a bandwidth of a radio frequency link, a maximum transmit power, a self-interference cancellation suppression ratio, a main lobe width, a side lobe position, a number of side lobes, or a relative power of a beam formed by a beamforming technology.

44. The wireless sensing apparatus according to claim 43, wherein the position of the sensing target comprises at least one of: an absolute position of the sensing target, or a relative position between the sensing target and the second device.

45. The wireless sensing apparatus according to any one of claims 37 to 44, wherein
the transmitting module is further configured to transmit second information to the target second device, wherein the second information is used to indicate related information of at least one other second device surrounding the target second device.

46. The wireless sensing apparatus according to claim 45, wherein the related information of the other second device comprises at least one of: device information of the other second device or a time-frequency resource allocated to the other second device.

47. The wireless sensing apparatus according to any one of claims 37 to 46, wherein for any two second devices configured to transmit a sensing signal, the two second devices are allocated different time-domain resources and/or different frequency-domain resources.

48. The wireless sensing apparatus according to any one of claims 37 to 47, wherein
the transmitting module is further configured to transmit third information to the at least one of the plurality of second devices, wherein the third information transmitted to the target second device is used to instruct the target second device to report sensing information, wherein the sensing information is acquired based on a sensing signal from a sensing target;
the apparatus further comprises:
a receiving module, configured to receive sensing information respectively transmitted from the at least one of the plurality of second devices.

49. The wireless sensing apparatus according to claim 48, further comprising:
a processing module, configured to determine a sensing result of the sensing target based on the sensing information respectively transmitted from the at least one of the plurality of second devices.

50. The wireless sensing apparatus according to any one of claims 37 to 49, wherein
the transmitting module is further configured to respectively transmit first configuration information to the at least one of the plurality of second devices, wherein the first configuration information transmitted to the target second device is used to indicate configuration information for the target second device to perform a sensing measurement and/or sensing target information, wherein the sensing measurement comprises transmitting a sensing signal and/or receiving a sensing signal.

51. The wireless sensing apparatus according to claim 50, wherein the first configuration information is used to indicate at least one of:
a number of times of the sensing measurement;
a period of the sensing measurement;
an effective duration of the time-frequency resource;
ambiguous position information of a sensing target;
a transmit power for transmitting the sensing signal on the time-frequency resource; or
an antenna transmission mode for transmitting the sensing signal on the time-frequency resource.

52. The wireless sensing apparatus according to claim 50 or 51, wherein
the transmitting module is further configured to respectively transmit second configuration information to the at least one of the plurality of second devices, wherein the second configuration information transmitted to the target second device is used to instruct the target second device to stop the sensing measurement.

53. The wireless sensing apparatus according to any one of claims 37 to 52, wherein the first device is further configured to: transmit a sensing signal to a sensing target, and/or receive a sensing signal from the sensing target.

54. The wireless sensing apparatus according to any one of claims 37 to 53, wherein the first device is further configured to: cooperate with a third device to acquire a sensing result of a sensing target, wherein the third device is another device having a same or similar function as the first device.

55. The wireless sensing apparatus according to claim 54, wherein a coverage area of the third device and a coverage area of the first device have an overlapping area, and the sensing target is located within the overlapping area.

56. The wireless sensing apparatus according to any one of claims 37 to 55, further comprising:
a receiving module, configured to receive fourth information respectively transmitted from the at least one of the plurality of second devices, wherein the fourth information transmitted from the target second device comprises at least one of: location information of the target second device, timing information of the target second device, or an accuracy of the location information of the target second device.

57. A wireless sensing apparatus, comprising:
a receiving module, configured to receive first information from a first device, wherein the first information is used to indicate a time-frequency resource allocated to the second device, wherein the time-frequency resource is used to transmit a sensing signal and/or receive a sensing signal.

58. The wireless sensing apparatus according to claim 57, wherein
the receiving module is further configured to receive location information and/or timing information of the first device from the first device.

59. The wireless sensing apparatus according to claim 57 or 58, wherein
the receiving module is further configured to receive coverage area information from the first device, wherein the coverage area information is used to indicate characteristics of a coverage area of the first device.

60. The wireless sensing apparatus according to claim 53, wherein the coverage area information comprises at least one of:
a size of the coverage area;
a shape of the coverage area;
building information within the coverage area;
road information within the coverage area; or
a map of the coverage area.

61. The wireless sensing apparatus according to any one of claims 57 to 60, further comprising:
a transmitting module, configured to transmit device information of the second device to the first device, wherein the device information comprises at least one of: a sensing capability of the second device, a relative position between the second device and a sensing target, or environmental information in which the second device is located.

62. The wireless sensing apparatus according to claim 61, wherein the sensing capability of the second device comprises a feature for which sensing is supported by the second device and a parameter of the second device.

63. The wireless sensing apparatus according to claim 62, wherein
the feature for which sensing is supported by the second device comprises at least one of: a position, a size, a shape, a surface material, a speed, an acceleration, a movement direction, a rotation period, a vibration frequency, or a movement trajectory of the sensing target;
the parameter of the second device comprises at least one of: a number of antennas, an antenna gain, a bandwidth of an antenna, a bandwidth of a radio frequency link, a maximum transmit power, a self-interference cancellation suppression ratio, a main lobe width, a side lobe position, a number of side lobes, or a relative power of a beam formed by a beamforming technology.

64. The wireless sensing apparatus according to claim 63, wherein the position of the sensing target comprises at least one of: an absolute position of the sensing target, or a relative position between the sensing target and the second device.

65. The wireless sensing apparatus according to any one of claims 57 to 64, wherein
the receiving module is further configured to receive second information from the first device, wherein the second information is used to indicate related information of at least one other second device surrounding the second device.

66. The wireless sensing apparatus according to claim 65, wherein the related information of the other second device comprises at least one of: device information of the other second device or time-frequency resource allocated to the other second device.

67. The wireless sensing apparatus according to any one of claims 57 to 66, wherein
the receiving module is further configured to receive third information from the first device, wherein the third information is used to instruct the second device to report sensing information, wherein the sensing information is acquired based on a sensing signal from a sensing target;
the wireless sensing apparatus further comprises:
a transmitting module, configured to transmit the sensing information to the first device.

68. The wireless sensing apparatus according to claim 67, wherein the sensing information carries location information of the second device.

69. The wireless sensing apparatus according to any one of claims 57 to 68, wherein
the receiving module is further configured to receive first configuration information from the first device, wherein the first configuration information is used to indicate configuration information for the second device to perform a sensing measurement and/or sensing target information, wherein the sensing measurement comprises transmitting a sensing signal and/or receiving a sensing signal.

70. The wireless sensing apparatus according to claim 69, wherein the first configuration information is further used to indicate at least one of:
a number of times of the sensing measurement;
a period of the sensing measurement;
an effective duration of the time-frequency resource;
ambiguous position information of a sensing target;
a transmit power for transmitting the sensing signal on the time-frequency resource; or
an antenna transmission mode for transmitting the sensing signal on the time-frequency resource.

71. The wireless sensing apparatus according to claim 69 or 70, wherein
the receiving module is further configured to receive second configuration information from the first device, wherein the second configuration information is used to instruct the second device to stop the sensing measurement.

72. The wireless sensing apparatus according to any one of claims 57 to 71, further comprising:
a transmitting module, configured to transmit fourth information to the first device, wherein the fourth information comprises at least one of: location information of the second device, timing information of the second device, or an accuracy of the location information of the second device.

73. A communication device, comprising a processor and a memory, wherein the memory is configured to store one or more computer programs, which when executed by the processor, cause the communication device to perform the wireless sensing method as defined in any one of claims 1 to 20, or perform the wireless sensing method as defined in any one of claims 21 to 36.

74. A computer-readable storage medium, storing one or more computer programs, which when executed by a processor, cause the processor to perform the wireless sensing method as defined in any one of claims 1 to 20, or to perform the wireless sensing method as defined in any one of claims 21 to 36.

75. A chip, comprising programmable logic circuitry and/or one or more program instructions, wherein the chip, when running, is caused to perform the wireless sensing method as defined in any one of claims 1 to 20, or to perform the wireless sensing method as defined in any one of claims 21 to 36.

76. A computer program product, comprising one or more computer instructions stored in a computer-readable storage medium, wherein the one or more computer instructions, when read from the computer-readable storage medium and executed by a processor, cause the processor to perform the wireless sensing method as defined in any one of claims 1 to 20, or to perform the wireless sensing method as defined in any one of claims 21 to 36.
